**Europäisches Patentamt**

(19) **European Patent Office**

**Office européen des brevets**

(11) Numéro de publication: **0 030 579**
**B1**

(12) **FASCICULE DE BREVET EUROPEEN**

(45) Date de publication du fascicule du brevet:
04.04.84

(21) Numéro de dépôt: **79400851.6**

(22) Date de dépôt: **13.11.79**

(51) Int. Cl.³: **B 60 C 1/00,** C 08 L 9/06

(54) **Bande de roulement pour pneumatiques d'engins de génie civil.**

(43) Date de publication de la demande:
**24.06.81 Bulletin 81/25**

(45) Mention de la délivrance du brevet:
**04.04.84 Bulletin 84/14**

(84) Etats contractants désignés:
**AT BE CH DE FR GB IT LU NL SE**

(56) Documents cités:
**DE - B - 1 301 730
DE - B - 1 545 518
FR - A - 2 080 661**

(73) Titulaire: **MICHELIN & CIE (Compagnie Générale des Etablissements Michelin) Société dite:, 4 rue du Terrail, F-63000 Clermont-Ferrand (FR)**

(72) Inventeur: **Bonassi, Daniel, 20 Impasse des Bouleaux, Mozac F-63200 Riom (FR)**
Inventeur: **Berthy, Jean-Claude, Route de Mozac, St-Hyppolyte F-63140 Chatel-Guyon (FR)**

(74) Mandataire: **Hiebel, Robert et al, MICHELIN & CIE - Service K. Brevets, F-63040 Clermont-Ferrand Cedex (FR)**

### Bande de roulement pour pneumatiques d'engins de génie civil

La présente invention concerne une bande de roulement possédant une résistance aux perforations et auc arrachements hautement améliorée.

Les pneumatiques d'engins de Génie Civil tels que des »chargeuses« opérant dans des carrières ou des mines évoluent le plus souvent sur des sols rocailleux et empierrés présentant de nombreuses aspérités tranchantes. Ces pneumatiques sont soumis à de très importantes sollicitations, sous de forts couples moteurs et il est grandement désirable que les bandes de roulement et/ou les flancs de ces pneus possèdent une excellente résistance globale aux agressions dues à des corps étrangers et ce tant à des températures relativement faibles de l'ordre de 20° à 30°C qu'à des températures élevées, de l'ordre de 60° à 100°C, qui sont des températures de fonctionnement assez fréquentes.

La résistance globale des compositions élastomères est liée à deux paramètres qui interagissent entre eux et qui sont d'une part la résistance à la perforation c'est-à-dire la résistance à la pénétration de corps étrangers dans la gomme et à la coupure ainsi qu'à la propagation de cette dernière et, d'autre part, la résistance à l'arrachement de gomme ou encore résistance à l'écaillement.

Dans le fascicule de brevet DE-A-1 545 518 est décrit un pneumatique pour véhicule routier dont la bande de roulement est constituée par un mélange d'un copolymère butadiène-styrène ayant une teneur en styrène de 30 à 60% en poids, contenant en outre 15 à 45 parties en poids de noir de carbone pour 100 parties en poids de copolymère ou pour 100 parties en poids du copolymère plus l'huile d'extension s'il est étendu à l'huile et moins de 50 parties en poids d'huile d'extension pour 100 parties en poids de copolymère et qui possède de bonnes propriétés de tenue de route et de roulement par temps froid en même temps que des pertes par abrasion d'ordre normal grâce à la teneur réduite en noir de carbone du mélange constituant la bande de roulement du pneu.

Un pneumatique ayant une telle bande de roulement ne possède cependant pas une bonne résistance aux perforations et à l'arrachement.

Par ailleurs, différents moyens ont été proposés pour améliorer simultanément la résistance à la perforation et la résistance à l'écaillement des compositions élastomères des pneus de Génie Civil.

Ainsi on a utilisé des compositions élastomères à base de copolymère de butadiène-styrène renfermant 23,5 à 25% en poids des styrène pour 100 parties en poids de copolymère à la place de caoutchouc naturel et renfermant ou non des huiles d'extension, ou encore des coupages de copolymère butadiène-styrène avec du caoutchouc naturel et ce en combinaison avec un type de dessin de bande de roulement de pneus Génie Civil particulier (voir demands de brevet français n° 2 080 661 et 2 216 130).

On a renforcé les compositions par l'addition de charges renforçantes diverses parmi lesquelles des résines et plus particulièrement du noir de carbone sous forme de particules de dimensions très variables ayant ou non subi un traitement chimique de surface. Il a également été proposé d'accroître le taux de noir de carbone des compositions élastomères, ainsi on a ajouté jusqu'à 50 parties en poids de noir de carbone pour 100 parties en poids de caoutchouc naturel et jusqu'à 65 parties dans le cas de caoutchouc synthétiques secs (non étendus à l'huile) ou jusqu'à 80 parties lorsque ces caoutchouc sont étendus à l'huile, la teneur en noir dans ce dernier cas restant inchangée (65 parties) par rapport à la masse totale de caoutchouc plus l'huile d'extension. L'expérience montre que l'effet renforçant favorable du noir de carbone conféré à ces compositions élastomères passe par un optimum qui est atteint pour les taux en noir de carbone indiqués ci-dessus. Au-delà on constate des déchéances importantes de certaines propriétés physiques des compositions élastomères et par voie de conséquence une diminution de la résistance globale de celles-ci.

Aucune des solutions proposées n'a permis d'améliorer de façon satisfaisante la résistance globale des bandes de roulement de pneus Génie Civil car les moyens proposés ont permis d'atteindre un certain niveau de compromis qu'il n'a pas été possible jusqu'à présent de dépasser. La présente invention a pour objet de remédier à cet inconvénient.

Selon l'invention, pour améliorer la résistance globale des pneus de Génie Civil on utilise des compositions élastomères de butadiène-styrène ayant une teneur en styrène comprise entre 35% et 55% en poids pour 100 parties en poids d'élastomère butadiène-styrène.

La demanderesse a découvert de manière inattendue et surprenante que l'utilisation de composition élastomères de butadiène-styrène ayant une teneur en styrène comprise entre 35% et 55% en poids pour 100 parties en poids d'élastomère améliorait grandement la résistance globale des pneus de Génie Civil soumis à de fortes sollicitations de la part de corps étrangers, ce qui est particulièrement le cas des pneus de chargeuses qui sont soumis à de forts couples, lorsque par ailleurs ces pneus contiennent dans les proportions habituelles les autres ingrédients classiquement utilisés pour la fabrication d'enveloppes de pneumatiques tels que les agents de vulcanisation comme le soufre, les accélérateurs de vulcanisation, les anti-oxydants, les huiles d'extension, etc., le rapport parties en poids en noir de carbone sur parties en poids d'élastomère ou d'élastomère plus huile d'extension étant compris entre 0,6 et 0,65.

En d'autres termes, les compositions des bandes de roulement conformes à l'invention permettent d'accroître globalement dans des proportions notables l'effet renforçant obtenu jusqu'à présent avec

**0 030 579**

des formulations optimisées à base de copolymères butadiène-styrène renfermant 25% en poids de styrène pour 100 parties en poids d'élastomère et fortement chargées en noir ou en autres charges renforçantes. Ceci est d'autant plus surprenant qu'il est connu de l'homme de l'art que la résistance à l'usure et à l'abrasion de mélanges de gomme à base de copolymère butadiène-styrène décroît lorsque le taux de styrène augmente.

Les bandes de roulement selon l'invention peuvent être utilisées pour des pneus Génie Civil à carcasse croisée ou à carcasse radiale, ces derniers étant utilisés préférentiellement. Les élastomères butadiène-styrène à forte teneur en styrène, c'est-à-dire ayant 35% à 55% en poids de styrène pour 100 parties en poids d'élastomère, peuvent être des SBR émulsion ou solution, statistiques ou non. Cependant, à titre préférentiel on utilise des SBR solution statistiques. Il est possible d'utiliser dans les compositions des bandes de roulement conformes à l'invention les huiles d'extension classiquement utilisées lors de la fabrication de bandes de roulement de pneumatiques telles que des huiles aromatiques ou paraffiniques, à raison de 0 à 30 parties en poids pour 100 parties en poids et de préférence de 10 à 25 parties en poids d'élastomère.

L'invention est illustrée à titre non limitatif à l'aide de l'exemple suivant dans lequel toutes les proportions sont exprimées en poids.

### Exemple

On a réalisé quatre compositions caoutchouteuses à base de SBR préparé en solution utilisables pour confectionner des bandes de roulement de pneumatiques. Ces compositions ont été vulcanisées à 145° C pendant 60 minutes; leurs propriétés sont indiquées au tableau ci-dessous.

### Tableau

|  | A | B | C | D |
|---|---|---|---|---|
| **Compositions** | | | | |
| Caoutchouc butadiène-styrène à 25% de styrène | 100 | | 100 | |
| Caoutchouc butadiène-styrène à 40% de styrène | | 100 | | 100 |
| Noir de carbone »HAF« N 339 | 60 | 60 | 75 | 75 |
| ZnO | 4 | 4 | 4 | 4 |
| Acide stéarique | 1 | 1 | 1 | 1 |
| Huile Sundex 8125*) | | | 20 | 20 |
| Résine de pétrole aliphatique (pour collant à cru) | 5 | 5 | 5 | 5 |
| N-diméthyl-1,3-butyl-N'-phenyl-p-phénylène diamine | 1 | 1 | 1 | 1 |
| N-cyclohexyl-2-benzothiazole sulfénamide | 1 | 0,9 | 1,1 | 1,1 |
| Soufre | 1 | 0,9 | 1,1 | 1,1 |
| **Propriétés** | | | | |
| Module d'allongement à 300% (M Pa) | 2,35 | 2,30 | 2,24 | 2,32 |
| Indice de cassage Scott | | | | |
| — allongement à la rupture, % | 570 | 530 | 617 | 630 |
| — force de rupture, (M Pa) | 19,6 | 19,6 | 18,6 | 18,6 |
| — dureté Shore | 71 | 73 | 69 | 71 |

*) Sundex 8125 est une huile aromatique à 70%, de poids moléculaire 380, commercialisée par Sun Oil.

3

A l'aide de ces quatre compositions caoutchouteuses on confectionne quatre bandes de roulement qui sont utilisées pour fabriquer quatre pneus à carcasse radiale de dimension 12,00 × 20, qui sont vulcanisés selon la technique classique. Les pneus ainsi obtenus sont montés sur l'essieu arrière de camions opérant sur une piste rocailleuse reproduisant le sol d'une carrière ou d'une mine et sont soumis à un roulage reproduisant les conditions d'usage de pneus de »chargeuses« dans une carrière ou mine. Après 1500 km, les pneus sont pesés, les bandes de roulement examinées et l'état de celles-ci est noté, puis les quatre pneus sont déchapés pour déterminer le nombre de coupures traversant chaque bande de roulement pour pouvoir comparer les pneus témoins comportant les compositions caoutchouteuses A et C aux pneus conformes à l'invention comportant les compositions caoutchouteuses B et D.

Les résultats suivants ont été obtenus:

|  | B/A | D/C |
| --- | --- | --- |
| rapport des pertes de poids | 0,75 | 0,72 |
| rapport du nombre de coupures perforant la bande de roulement | 0,65 | 0,45 |

En outre, l'observation des bandes de roulement fait très nettement apparaître qu'il y a beaucoup moins d'arrachements de gomme dans le cas des pneus B et D possédant une bande de roulement conforme à l'invention que dans le cas des pneus témoins A et C.

Les résultats montrent que l'emploi d'un copolymère butadiène-styrène à forte teneur en styrène améliore de façon très importante la résistance globale de la bande de roulement sans affecter simultanément les autres propriétés. Il en résulte que les bandes de roulement à base de butadiène-styrène à forte teneur en styrène conviennent particulièrement pour des pneus destinés à équiper des »chargeuses«.

## Revendications

1. Bande de roulement pour enveloppe de pneumatique pour engins de Génie Civil à base d'un élastomère de copolymère butadiène-styrène renforcé par du noir de carbone et comprenant éventuellement une huile d'extension, caractérisée en ce que le copolymère possède une teneur en styrène comprise entre 35% et 55% en poids pour 100 parties en poids d'élastomère et en ce que le rapport parties en poids en noir de carbone sur parties en poids d'élastomère ou d'élastomère plus huile d'extension est compris entre 0,6 et 0,65.

2. Bande de roulement selon la revendication 1, caractérisée en ce qu'elle comprend 0 à 30 parties en poids d'huile d'extension pour 100 parties en poids d'élastomère.

3. Bande de roulement selon les revendications 1 et 2, caractérisée en ce que la teneur en styrène de l'élastomère est de 40% en poids pour 100 parties en poids d'élastomère.

4. Bande de roulement selon les revendications 1, 2, 3, caractérisée en ce que l'élastomère est un copolymère de butadiène-styrène statistique préparé en solution.

5. Enveloppe de pneumatique pour engins de Génie Civil, caractérisée en ce qu'elle comporte au moins la bande de roulement selon l'une quelconque des revendications 1 à 4.

6. Enveloppe de pneumatique selon la revendication 5, caractérisée en ce qu'elle possède une armature de carcasse radiale.

## Patentansprüche

1. Lauffläche für Luftreifen geländegängiger Fahrzeuge auf der Basis eines Elastomeren Butadien-Styren-Copolymeren mit Aktivruß verstärkt und gegebenenfalls mit einem Strecköl versehen, dadurch gekennzeichnet, daß das Copolymere einen Styrengehalt zwischen 35 und 55 Gew.-%, bezogen auf das Elastomerengemisch und daß das Gewichtsverhältnis des Aktivrußes zum Elastomeren oder Elastomeren einschließlich des Strecköles 0,6 bis 0,65 beträgt.

2. Lauffläche nach Anspruch 1, dadurch gekennzeichnet, daß zwischen 0 und 30 Gew.-Teile Strecköl auf 100 Gew.-Teile Elastomeren vorliegt.

3. Lauffläche nach Anspruch 1 und 2, dadurch gekennzeichnet, daß der Styrengehalt des Elastomeren 40 Gew.-Teile pro 100 Gew.-Teile Elastomeren ausmacht.

4. Lauffläche nach den Ansprüchen 1, 2 und 3, dadurch gekennzeichnet, daß das Elastomere ein in Lösung hergestelltes statistisches Butadien-Styren-Copolymer ist.

5. Luftreifen für geländegängige Fahrzeuge, dadurch gekennzeichnet, daß er zumindest die Lauffläche gemäß einem der Ansprüche 1 bis 4 ausgebildet hat.

6. Luftreifen nach Anspruch 5, dadurch gekennzeichnet, daß er eine Radialkarkasse besitzt.

**Claims**

1. A tread for a pneumatic tire for civil engineering equipment, having a base of a butadiene-styrene copolymer elastomer reinforced by carbon black and optionally comprising an extension oil, characterized by the fact that the elastomer has a styrene content of between 35% and 55% by weight per 100 parts by weight of elastomer and that the ratio of parts by weight of carbon black to the parts by weight of elastomer or elastomer plus extension oil being from 0.6 to 0.65.

2. The tread according to claim 1, characterized by the fact that it comprises 0 to 30 parts by weight of extension oil per 100 parts by weight of elastomer.

3. The tread according to claims 1 and 2, characterized by the fact that the styrene content of the elastomer is 40% by weight per 100 parts by weight of elastomer.

4. The tread according to claims 1, 2 and 3, characterized by the fact that the elastomer is a statistical butadiene-styrene copolymer prepared in solution.

5. A pneumatic tire for civil engineering equipment, characterized by the fact that it comprises a tread according to claim 1, 2, 3 or 4.

6. The pneumatic tire according to claim 5, characterized by the fact that it has a radial carcass.